# EUROPÄISCHE PATENTSCHRIFT

(11) **EP 3 532 751 B1**
(45) Veröffentlichungstag und Bekanntmachung des Hinweises auf die Patenterteilung: **15.07.2020**
(21) Anmeldenummer: 17771423.5
(22) Anmeldetag: 19.09.2017
(51) Int. Cl.: F16H 61/02, B60W 10/06, B60W 10/103, B60W 30/194

(54) **VERFAHREN ZUM DURCHFÜHREN EINES KALTSTARTS**
METHOD FOR CARRYING OUT COLD-STARTING
PROCÉDÉ POUR L'EXÉCUTION D'UN DÉMARRAGE À FROID

(30) Priorität: 26.10.2016 DE 102016221126
(43) Veröffentlichungstag der Anmeldung: 04.09.2019
(73) Patentinhaber: ZF Friedrichshafen AG, 88046 Friedrichshafen (DE)
(72) Erfinder: GLÖCKNER, Rico, 94060 Pocking (DE); KUHN, Jan-Frederik, 88046 Friedrichshafen (DE); HIEMER, Marcus, 88074 Meckenbeuren (DE); MORRISON, Robert, 88069 Tettnang (DE); WEBER, Andreas, 88090 Immenstaad (DE)
(74) Vertreter: ZF Friedrichshafen AG
(86) Internationale Anmeldenummer: PCT/EP2017/073655
(87) Internationale Veröffentlichungsnummer: WO 2018/077538

(56) Entgegenhaltungen:
- DE-A1-102015 200 682
- US-A1- 2007 142 168

## Beschreibung

Die Erfindung betrifft ein Verfahren zum Durchführen eines Kaltstarts bei einem Fahrzeug, welches ein Leistungsverzweigungsgetriebe mit einem hydrostatische Einheiten umfassenden Hydrostat aufweist.

Der grundsätzliche Aufbau eines Fahrzeugs mit einem Leistungsverzweigungsgetriebe, welches einen hydrostatische Einheiten umfassenden Hydrostat aufweist, ist dem Fachmann bekannt. So offenbart die DE 10 2007 047 194 A1 den Aufbau eines Antriebsstrangs eines solchen Kraftfahrzeugs. Das Antriebsaggregat bzw. eine Antriebsmaschine ist an eine Eingangswelle des Leistungsverzweigungsgetriebes gekoppelt. Das Leistungsverzweigungsgetriebe verfügt über einen hydrostatischen Zweig und einen mechanischen Zweig, die über ein als Planetenradgetriebe ausgebildetes Summiergetriebe summiert werden. Das Leistungsverzweigungsgetriebe stellt mindestens zwei Fahrbereiche in einer Vorwärtsfahrtrichtung und mindestens zwei Fahrbereiche in einer Rückwärtsfahrtrichtung bereit. Hierzu umfasst das Leistungsverzweigungsgetriebe eine Kupplung für eine Vorwärtsfahrt und eine Kupplung für eine Rückwärtsfahrt, wobei die Kupplung für die Vorwärtsfahrt und die Kupplung für die Rückwärtsfahrt auch als Wendekupplungen bezeichnet werden. Die Fahrbereiche bzw. Gänge in der Vorwärtsfahrtrichtung und der Rückwärtsfahrtrichtung werden über Gangkupplungen, die auch als Bereichskupplungen bezeichnet werden, bereitgestellt. Der hydrostatische Zweig des Leistungsverzweigungsgetriebes umfasst einen Hydrostat. Ein solcher Hydrostat wird von einer ersten hydrostatischen Einheit und einer zweiten hydrostatischen Einheit bereitgestellt, wobei eine der hydrostatischen Einheiten als Pumpe und die anderen hydrostatischen Einheiten als Motor wirkt.

Aus der DE 10 2009 045 510 sind weitere Details eines Hydrostat bekannt, wobei auch dieser Hydrostat zwei hydrostatische Einheiten umfasst. Die hydrostatischen Einheiten des Hydrostats wirken mit einem Positionsregelventil zusammen. Über das Positionsregelventil können die hydrostatischen Einheiten des Hydrostats mit einem hydraulischen Druck beaufschlagt werden, um dieselben anzusteuern.

In der DE 2009 045 510 A1 wirkt mit dem Positionsregelventil weiterhin ein Hochdruckregelventil zusammen. Es ist jedoch auch ein Hydrostat bekannt, der kein derartiges Hochdruckregelventil benötigt, sondern lediglich ein Positionsregelventil aufweist.

Aus der Praxis ist es ferner bekannt, im Bereich des Hydrostats Drucksensoren zu verbauen. In einem Hydrostat sind typischerweise zwei Drucksensoren verbaut, wobei unter anderem in Abhängigkeit der Messwerte dieser Drucksensoren die Beaufschlagung und Regelung der hydrostatischen Einheiten des Hydrostats erfolgt.

Bei Leistungsverzweigungsgetrieben mit einem Hydrostat besteht der Nachteil, dass im Gegensatz zu Wandlergetrieben keine ausreichende Wärmeenergie in dem Getriebe erzeugt wird, um das Hydraulikmittel in dem Leistungsverzweigungsgetriebe ausreichend zu erwärmen.

Aus der DE 10 2015 200 682 A1 ist ein Verfahren zum Durchführen eines Kaltstarts bei einem Fahrzeug mit einem Leistungsverzweigungsgetriebe, das einen Hydrostat umfasst, bekannt. Dabei werden mehrere Kaltstartschritte durchlaufen, wobei die Reihenfolge und die Länge der Kaltstartschritte von der Starttemperatur des Hydraulikmittels zu Beginn des Kaltstarts abhängig ist und verändert wird. Obwohl mit dem aus der DE 10 2015 200 682 A1 bekannten Verfahren bereits ein wirkungsvolles Verfahren für einen Kaltstart eines Fahrzeugs mit einem Leistungsverzweigungsgetriebe, welches einen Hydrostat umfasst, vorliegt, besteht Bedarf daran, den Kaltstart eines solchen Fahrzeugs weiter zu verbessern.

Aus der DE 10 2010 007 987 A1 ist ein Verfahren für einen Kaltstart eines ein Automatikgetriebe umfassenden Kraftfahrzeugs bekannt.

US 2007/142168 A offenbart ein Verfahren zum Erhöhen einer Öltemperatur in einem stufenlosen Getriebe während des Motorstarts, wobei das Getriebe eine Fluidpumpe und einen Motor und ein mechanisches Getriebe umfasst. Das Verfahren umfasst das Starten des Motors, das Aufrechterhalten der Fluidpumpe bei einer Verdrängung von im Wesentlichen Null und das Erwärmen des Getriebeöls durch relative Drehung einer ersten Kupplungsscheibe und einer ersten Kupplungsnabe einer ersten Kupplungsanordnung und durch relative Drehung einer zweiten Kupplungsscheibe und einer zweiten Kupplung Nabe einer zweiten Kupplungsanordnung. Das Verfahren umfasst ferner das Aufrechterhalten eines im Wesentlichen Null-Nettodrehmoments von dem Getriebe während des Erhitzens des Öls durch die erste und die zweite Kupplungsanordnung

Hiervon ausgehend liegt der Erfindung die Aufgabe zu Grunde, ein neuartiges Verfahren zum Durchführen eines Kaltstarts bei einem Fahrzeug mit einem Leistungsverzweigungsgetriebe mit einem Hydrostat zu schaffen.

Diese Aufgabe wird durch ein Verfahren gemäß Patentanspruch 1 gelöst.

Erfindungsgemäß wird während der Ausführung zumindest eines Kaltstartschritts ein von der Temperatur des Leistungsverzweigungsgetriebes abweichender Zustand des Leistungsverzweigungsgetriebes überwacht, wobei abhängig von diesem Zustand ein Wechsel von dem jeweiligen Kaltstartschritt auf einen nachfolgenden Kaltstartschritt durchgeführt und damit die Zeitdauer des jeweiligen Kaltstartschritts angepasst wird.

Beim erfindungsgemäßen Verfahren zum Durchführen eines Kaltstarts eines Fahrzeugs mit einem Leistungsverzweigungsgetriebe, welches einen Hydrostat aufweist, wird bei der Durchführung zumindest eines Kaltstartschritts wenigstens ein Wert eines getriebeinternen Drucksensors des Leistungsverzweigungsgetriebes überwacht. Abhängig von diesem Wert, also abhängig davon, ob Bedingungen in einem Kaltstartschritt erfüllt sind, erfolgt ein Wechsel von dem jeweiligen Kaltstartschritt auf einen nachfolgenden Kaltstartschritt, wodurch die Zeitdauer des jeweiligen Kaltstartschritts, in dem der Wert des getriebeinternen Drucksensors des Leistungsverzweigungsgetriebes überwacht wird, angepasst wird. Hierdurch kann der Kaltstart eines Fahrzeugs mit Leistungsverzweigungsgetriebe innerhalb kürzerer Zeit durchgeführt werden.

Neben der kurzen Zeitdauer, in welcher der erfindungsgemäße Kaltstart möglich ist, werden weitere Vorteile durch das erfindungsgemäße Verfahren bereitgestellt. So ist das erfindungsgemäße Verfahren zum Durchführen eines Kaltstarts robust gegenüber den vorliegenden Randbedingungen, sodass insbesondere keine Anpassung des Verfahrens in Bezug auf unterschiedliche Durchkühlungsvarianten des Leistungsverzweigungsgetriebes, in Bezug auf unterschiedliche Viskositäten des Hydrauliköls, sowie in Bezug auf bautechnische Veränderungen im Getriebe erfolgen muss. Das Verfahren kann demnach unabhängig davon, über welchen Zeitraum sich das Leistungsverzweigungsgetriebe abgekühlt hat, unabhängig davon, ob das Leistungsverzweigungsgetriebe ein Winteröl oder ein Sommeröl verwendet, und unabhängig von der konkreten Bauform des Getriebes genutzt werden, um innerhalb kurzer Zeit und demnach mit geringen Komforteinbußen einen Kaltstart durchzuführen.

Nach einer vorteilhaften Weiterbildung der Erfindung werden zum Kaltstart die folgenden Kaltstartschritte nacheinander durchgeführt: Zunächst ein Druckaufbauschritt, um im Leistungsverzweigungsgetriebe definiert Druck aufzubauen und dasselbe über den Betrieb einer Getriebepumpe zu erwärmen. Anschließend ein Druckkontrollschritt, um den Druckaufbau im Getriebe zu überprüfen. Nachfolgend ein erster Heizschritt, um im Leistungsverzweigungsgetriebe mindestens eine Wendekupplung zu schließen und dasselbe über im Leistungsverzweigungsgetriebe anfallende Verlustleistung zu erwärmen. Anschließend ein Pulsationsschritt, um im Leistungsverzweigungsgetriebe Bereichskupplungen desselben gepulst zu schließen und zu öffnen. Nachfolgend ein zweiter Heizschritt, um im Leistungsverzweigungsgetriebe mindestens ein Positionsregelventil des Hydrostats zu erwärmen. Anschließend ein Antriebsvorbereitungsschritt, um ein Verhalten der Wendekupplungen und des Hydrostats des Leistungsverzweigungsgetriebes zu überprüfen und das Leistungsverzweigungsgetriebe auf einen Anfahrvorgang des Fahrzeugs vorzubereiten. Durch das nacheinander folgende, sequentielle Durchlaufen dieser Kaltstartschritte kann der Kaltstart besonders effektiv innerhalb kurzer Zeit erfolgen. Während zumindest einiger der obigen Kaltstartschritte wird die Funktion des Leistungsverzweigungsgetriebes fortlaufend überprüft. Anhand dieser Überprüfungen wird zumindest für einige Kaltstartschritte des Kaltstarts die Dauer des jeweiligen Kaltstartschritts festgelegt.

Vorzugsweise wird während des Druckaufbauschritts von einem ersten Druckaufbauteilschritt, in welchem ein Antriebsaggregat bei einer relativ geringen Antriebsaggregatdrehzahl betrieben wird, auf einen zweiten Druckaufbauteilschritt, in welchem das Antriebsaggregat bei einer relativ großen Antriebsaggregatdrehzahl betrieben wird, gewechselt, wobei vom ersten Druckaufbauteilschritt auf den zweiten Druckaufbauteilschritt abhängig von mindestens zwei Drücken im Hydrostat gewechselt wird.

Vorzugsweise wird vom Druckaufbauschritt auf den Druckkontrollschritt abhängig von einer Mindestdauer des Druckaufbauschritts gewechselt. Es erlaubt einen besonders vorteilhaften Übergang vom Druckaufbauschritt auf den Druckkontrollschritt.

Vorzugsweise wird vom Druckkontrollschritt auf den ersten Heizschritt abhängig von mindestens zwei Drücken im Hydrostat gewechselt. Hiermit ist ein besonders vorteilhafter Übergang vom Druckkontrollschritt auf den ersten Heizschritt möglich.

Vorzugsweise wird vom ersten Heizschritt auf den Pulsationsschritt abhängig von einem Vergleich eines Ist-Verhaltens des Hydrostats auf eine definierte Ansteuerung desselben und einem entsprechenden Soll-Verhalten des Hydrostats gewechselt. Dies ermöglicht einen besonders vorteilhaften Übergang vom ersten Heizschritt auf den Pulsationsschritt.

Vorzugsweise wird vom Pulsationsschritt auf den zweiten Heizschritt abhängig von einer definiten Pulsationsanzahl gewechselt, die zu Beginn des Kaltstarts abhängig von der die Starttemperatur des Leistungsverzweigungsgetriebes repräsentierenden Temperatur gewählt wird. Damit ist ein besonders vorteilhafter Übergang vom Pulsationsschritt auf den zweiten Heizschritt möglich.

Vorzugsweise wird vom zweiten Heizschritt auf den Antriebsvorbereitungsschritt abhängig von einer definierten Zeitspanne gewechselt, die unabhängig von der die Starttemperatur des Leistungsverzweigungsgetriebes repräsentierenden Temperatur ist. Dies ermöglicht einen vorteilhaften Übergang vom zweiten Heizschritt auf den Antriebsvorbereitungsschritt.

Vorzugsweise werden der Antriebsvorbereitungsschritt und damit der Kaltstart abhängig von einem sich bei einem Schließvorgang der Wendekupplungen an denselben ausbildenden Abbaus der Differenzdrehzahl und abhängig von einer sich bei Ansteuerung des Hydrostats ausbildenden Reaktionszeit beendet. Dies ermöglicht eine besonders vorteilhafte Beendigung des Antriebsvorbereitungsschritts und damit des eigentlichen Kaltstarts.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Signalflussdiagramm zur Verdeutlichung der Abfolge von Kaltstartschritten des erfindungsgemäßen Verfahrens zum Durchführen eines Kaltstarts bei einem Fahrzeug mit einem Leistungsverzweigungsgetriebe, welches hydrostatischen Einheiten aufweist;
- Fig. 2: ein Zeitdiagramm zur Verdeutlichung von Details eines Druckaufbauschritt des erfindungsgemäßen Verfahrens;
- Fig. 3: ein Zeitdiagramm zur Verdeutlichung weiterer Details eines Druckaufbauschritt des erfindungsgemäßen Verfahrens;
- Fig. 4: ein Zeitdiagramm zur Verdeutlichung von Details eines Druckkontrollschritts des erfindungsgemäßen Verfahrens;
- Fig. 5: ein Zeitdiagramm zur Verdeutlichung von Details eines ersten Heizschritts des erfindungsgemäßen Verfahrens;
- Fig. 6: ein Zeitdiagramm zur Verdeutlichung weiterer Details des ersten Heizschritts des erfindungsgemäßen Verfahrens;
- Fig. 7: ein Zeitdiagramm zur Verdeutlichung von Details eines Pulsationsschritts des erfindungsgemäßen Verfahrens;
- Fig. 8: ein Zeitdiagramm zur Verdeutlichung von Details eines zweiten Heizschritts des erfindungsgemäßen Verfahrens;
- Fig. 9: ein Zeitdiagramm zur Verdeutlichung von Details Antriebsvorbereitungsschritts des erfindungsgemäßen Verfahrens;
- Fig. 10: ein Zeitdiagramm zur Verdeutlichung weiterer Details des Antriebsvorbereitungsschritts des erfindungsgemäßen Verfahrens;
- Fig. 11: ein Zeitdiagramm zur Verdeutlichung weiterer Details des Antriebsvorbereitungsschritts des erfindungsgemäßen Verfahrens; und

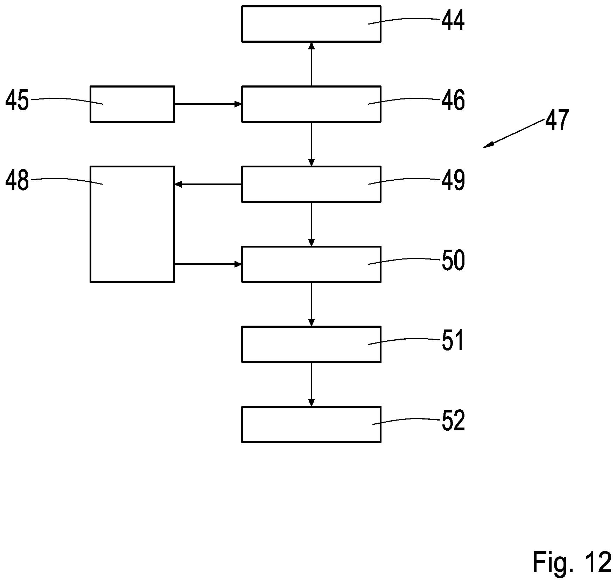

- Fig. 12: ein Blockschaltbild eines Fahrzeugs mit einem Leistungsverzweigungsgetriebe, welches einen Hydrostat aufweist.

Die Erfindung betrifft ein Verfahren zum Durchführen eines Kaltstarts bei einem Fahrzeug mit einem Leistungsverzweigungsgetriebe, welches einen Hydrostat aufweist.

Bei einem solchen Fahrzeug ist ein Antriebsaggregat an eine Eingangswelle des Leistungsverzweigungsgetriebes gekoppelt.

Das Leistungsverzweigungsgetriebe umfasst zusätzlich zu einem hydrostatischen Zweig, in den der Hydrostat eingebunden ist, einen mechanischen Zweig. Der mechanische Zweig und der hydrostatische Zweig werden summiert bzw. aufgeteilt. Das Leistungsverzweigungsgetriebe kann sowohl für eine Vorwärtsfahrtrichtung als auch für eine Rückwärtsfahrtrichtung jeweils mindestens zwei Fahrbereiche und damit Gänge bereitstellen, wobei das Leistungsverzweigungsgetriebe hierzu Wendekupplungen und Bereichskupplungen aufweist. Der Hydrostat, der auch als Hydrostat bezeichnet wird, ist ausgehend von einem Positionsregelventil desselben steuerbar. Der Druck im Hydrostat, der zwei als Pumpe und Motor wirkende hydrostatische Einheiten umfasst, ist mit Drucksensoren überwachbar.

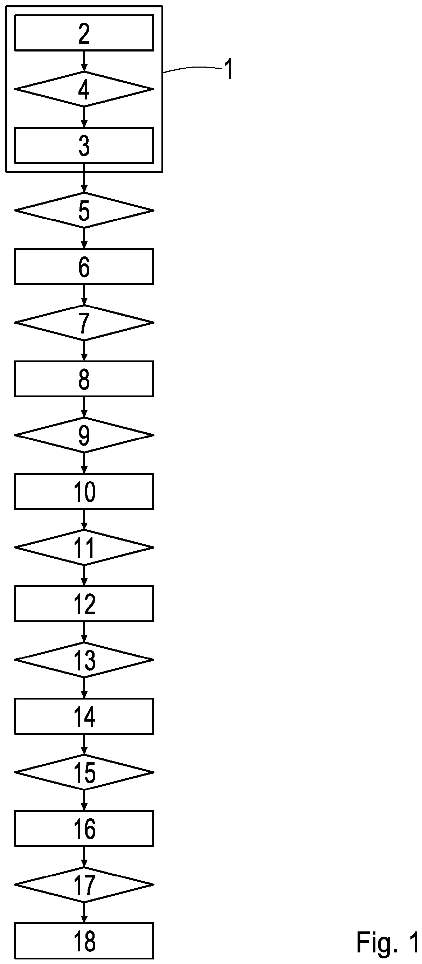

Fig. 1 zeigt schematisiert ein exemplarisches Blockschaltbild eines Fahrzeugs mit einem Antriebsaggregat 45, einem Power-Take-Out 44, einem Abtrieb 52 und einem Leistungsverzeigungsgetriebe 47 mit sogenannter sekundärer Kopplung. Das Leistungsverzweigungsgetriebe 47 umfasst einen Hydrostat 48, der mit einem Planetenradgetriebe 49 und einem Summierungsgetriebe 50 zusammenwirkt, wobei das Summierungsgetriebe 50 Zahnradstufen aufweist. Der Hydrostat 48 umfasst die als Pumpe und Motor wirkenden hydrostatischen Einheiten. Antriebsseitig ist zwischen das Planetenradgetriebe 49 sowie das Antriebsaggregat 45 und den Power-Take-Out 44 eine Wendegetriebe 46 mit den Wendekupplungen zum Wechsel zwischen der Vorwärtsfahrtrichtung und der Rückwärtsfahrtrichtung geschaltet. Abtriebsseitig ist zwischen das Summierungsgetriebe 50 und den Abtrieb 52 ein Fahrbereichsgetriebe 51 mit den Bereichskupplungen zur Bereitstellung der mindestens zwei Fahrbereiche geschaltet. Innerhalb jedes Fahrbereichs sowie in der Vorwärtsfahrtrichtung und in der Rückwärtsfahrtrichtung kann stufenlos am Abtrieb 52 Antriebsleistung bereitgestellt werden. Das Leistungsverzweigungsgetriebe 47 umfasst den Hydrostat 48, das Planetenradgetriebe 49, das Summierungsgetriebe 50, das Wendegetriebe 46 und das Fahrbereichsgetriebe 51. Die eigentliche Leistungsverzweigung erfolgt in Hydrostat 48, Planetenradgetriebe 49 und Summierungsgetriebe 50.

Dieser grundsätzliche Aufbau ist dem Fachmann geläufig und insbesondere aus der DE 10 2007 047 194 A1 sowie aus der DE 10 2009 045 510 A1 bekannt.

Um einen Kaltstart an einem solchen Kraftfahrzeug durchzuführen, werden nacheinander mehrere Kaltstartschritte durchgeführt. Die Länge mindestens eines der Kaltstartschritte ist von einer die Starttemperatur des Leistungsverzweigungsgetriebes repräsentierenden Temperatur, so zum Beispiel von der Starttemperatur des Hydrauliköls des Leistungsverzweigungsgetriebes, abhängig.

Bei der Starttemperatur handelt es sich vorzugsweise um eine zum Zeitpunkt des Motorstarts bzw. zum Einschalten der Zündung gemessene Temperatur, zum Beispiel um die entsprechende Hydrauliköltemperatur des Leistungsverzweigungsgetriebes.

Erfindungsgemäß wird während der Ausführung mindestens eines Kaltstartschritts wenigstens ein Wert eines getriebeinternen Drucksensors überwacht. Abhängig von diesem Wert wird dann ein Wechsel von dem jeweiligen Kaltstartschritt, in dem wenigstens ein Wert eines getriebeinternen Drucksensors überwacht wird, auf den jeweiligen nachfolgenden Kaltstartschritt gewechselt, wobei hierdurch die Zeitdauer des jeweiligen Kaltstartschritts, in dem der wenigstens ein Wert eines getriebeinternen Drucksensors überwacht wird, angepasst wird.

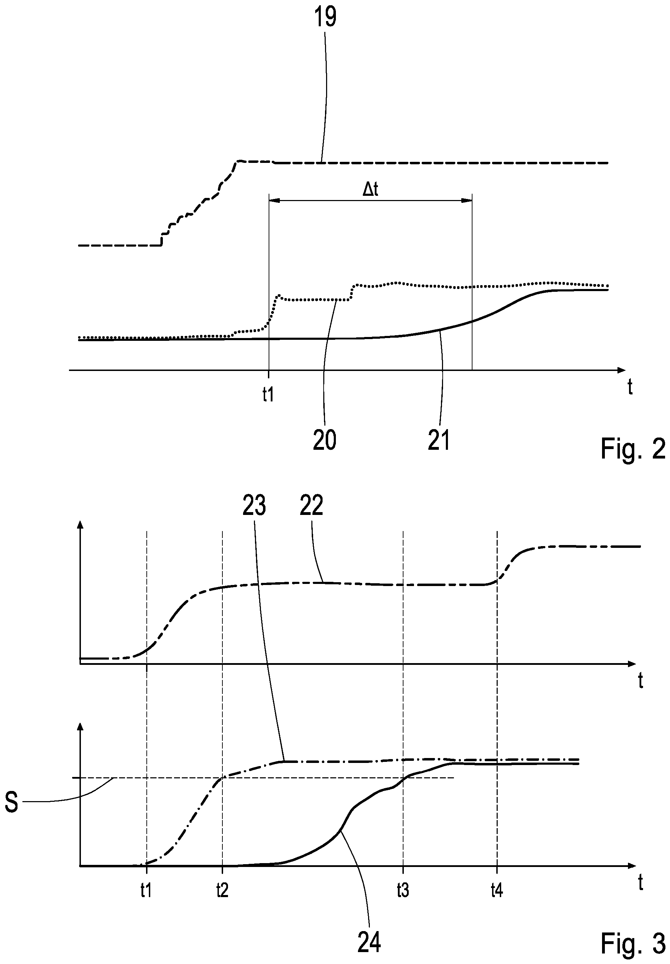

Das erfindungsgemäße Verfahren zum Durchführen eines Kaltstarts wird nachfolgende unter Bezugnahme auf Fig. 1 bis 11 im Detail beschrieben, wobei Fig. 1 ein die einzelnen Kaltstartschritte in ihrer Abfolge repräsentierendes Signalflussdiagramm zeigt, und wobei Fig. 2 bis 11 jeweils Details unterschiedlicher Kaltstartschritte des Verfahrens zeigen.

Beim erfindungsgemäßen Kaltstart wird zunächst ein Druckaufbauschritt 1 durchgeführt, um im Leistungsverzweigungsgetriebe definiert Druck aufzubauen, und um das Leistungsverzweigungsgetriebe über den Betriebe einer Getriebepump desselben zu erwärmen. Im Druckaufbauschritt 1 wird das Leistungsverzweigungsgetriebe ausschließlich mit Hilfe der Getriebepumpe desselben erwärmt.

Gemäß Fig. 1 untergliedert sich der Druckaufbauschritt 1 in einen ersten Druckaufbauteilschritt 2 und einen zweiten Druckaufbauteilschritt 3. Im ersten Druckaufbauteilschritt 2 wird das Antriebsaggregat des Fahrzeugs mit einer relativ geringen Antriebsaggregatdrehzahl betrieben, wohingegen in dem zweiten Druckaufbauteilschritt 3 das Antriebsaggregat des Fahrzeugs mit einer relativ großen Antriebsaggregatdrehzahl betrieben wird. Hiervon ist die Drehzahl der Getriebepumpe abhängig. Im ersten Druckaufbauteilschritt 2 ist demnach die Drehzahl des Antriebsaggregats und damit der Getriebepumpe kleiner als im zweiten Druckaufbauteilschritt 3.

In Block 4 des Signalflussdiagramms der Fig. 1 wird das Vorliegen einer Übergangsbedingung 4 überprüft, um vom ersten Druckaufbauteilschritt 2 auf den zweiten Druckaufbauteilschritt 3 zu wechseln, wobei dieser Übergang vom ersten Druckaufbauteilschritt 2 auf den zweiten Druckaufbauteilschritt 3 abhängig von mindestens zwei Drücken im Hydrostat ist. Wie bereits erwähnt, sind im Hydrostat zwei Drucksensoren verbaut. Dann, wenn die von den Drucksensoren bereitgestellten Druckmesswerte, also die Druckmesswerte beider Drucksensoren, einen entsprechenden Schwellwert oder Grenzwert erreichen oder übersteigen, wird ausgehend vom ersten Druckaufbauteilschritt 2 des Druckaufbauschritts 1 auf den zweiten Druckaufbauteilschritt 3 des Druckaufbauschritts 1 gewechselt und entsprechend die Antriebsaggregatdrehzahl erhöht.

Dabei ist insbesondere vorgesehen, dass auch eine Mindestverweilzeit bzw. Mindestdauer des ersten Druckaufbauteilschritts 2 vorgegeben wird, sodass dann nur dann vom ersten Druckaufbauteilschritt 2 auf den zweiten Druckaufbauteilschritt 3 gewechselt wird, wenn die Mindestdauer des ersten Druckaufbauteilschritts 2 erreicht ist und ferner beide Drucksensoren Messwerte bereitstellen, die über einem definierten Schwellwert bzw. Grenzwert liegen.

Während des Druckaufbauschritts 1 wird überprüft, ob auch für den zweiten Druckaufbauteilschritt 3 eine Mindestverweilzeit bzw. Mindestdauer erreicht wird. Ist dies der Fall und die entsprechende Übergangsbedingung 5 erfüllt, so wird ausgehend vom Druckaufbauschritt 1, also vom zweiten Druckaufbauteilschritt 3, auf einen Druckkontrollschritt 6 gewechselt.

An dieser Stelle sei darauf hingewiesen, dass die Mindestverweilzeiten bzw. Mindestdauern für den ersten Druckaufbauteilschritt 2 sowie den zweiten Druckaufbauteilschritt 3 von der Starttemperatur des Leistungsverzweigungsgetriebes bzw. von der Starttemperatur des Hydrauliköls abhängig sein können.

Je tiefer die Starttemperatur ist, desto größer werden die entsprechenden Mindestverweilzeiten gewählt.

Fig. 2 verdeutlicht in einem Zeitdiagramm über der Zeit t weitere Details des ersten Druckaufbauteilschritts 2 des Druckaufbauschritts 1, wobei in Fig. 2 über der Zeit t drei zeitliche Kurvenverläufe 19, 20 und 21 gezeigt sind, nämlich mit dem zeitlichen Kurvenverlauf 19 ein Drehzahlverlauf des Antriebsaggregats und mit den Kurvenverläufen 20 und 21 von den beiden Sensoren des hydrostatischen Antriebs bereitgestellte Messwerte. Dann, wenn zum Zeitpunkt t1 des ersten Druckaufbauteilschritts 2 der Fig. 2 die Antriebsaggregatdrehzahl 19 ein definiertes Niveau erreicht hat, welches der relativ geringen Drehzahl des ersten Druckaufbauteilschritts 2 entspricht, stellen nachfolgend die beiden Drucksensoren des Hydrostats die Messsignale 20, 21 bereit, wobei ein Zeitversatz Δt zwischen den von den Drucksensoren bereitgestellten Messsignalen 20, 21 dadurch bewirkt wird, dass der das Messsignal 20 bereitstellende Drucksensor ungedämpft ist, also keine hydraulische Blende aufweist, wohingegen der das Messsignal 21 bereitstellende Drucksensor gedämpft ist und eine hydraulische Blende aufweist.

Anhand der Größe des Zeitversatzes Δt kann auf die Viskosität des Hydrauliköls geschlossen werden, insbesondere darauf, ob hochviskoses oder niederviskoses Hydrauliköl vorliegt.

Weitere Details der Druckaufbauphase 1 zeigen die zeitlichen Kurvenverläufe der Fig. 3, wobei in Fig. 3 über der Zeit t mit dem Signalverlauf 22 wiederum ein zeitlicher Verlauf der Antriebsaggregatdrehzahl gezeigt ist, und wobei die Kurvenverläufe 23 und 24 wiederum die von den beiden Drucksensoren des Hydrostats bereitgestellten Messwerte visualisieren.

Bei dem das Messsignal 23 bereitstellenden Drucksensor handelt es sich demnach wiederum um einen ungedämpften Drucksensor ohne hydraulische Blende und bei dem das Messsignal 24 bereitstellenden Drucksensor um einen gedämpften Drucksensor mit hydraulischer Blende.

In Fig. 3 beginnt zum Zeitpunkt t1 die Druckaufbauphase 1, nämlich die erste Druckaufbauteilphase 2, wozu hierzu zwischen den Zeitpunkten t1 und t2 die Antriebsaggregatdrehzahl 22 auf ein definiertes Drehzahlniveau angehoben wird und nachfolgend zwischen den Zeitpunkten t2 und t3 der Fig. 3 konstant bleibt. Zwischen den Zeitpunkten t1 und t3 liegt demnach die erste Druckaufbauteilphase 2 vor.

Zum Zeitpunkt t3 erreichen die Messwerte 23 und 24 beider Drucksensoren einen Schwellwert S, sodass dann grundsätzlich beginnend mit dem Zeitpunkt t3 ein Übergang vom ersten Druckaufbauteilschritt 2 in den zweiten Druckaufbauteilschritt 3 und Erhöhung der Antriebsaggregatdrehzahl erfolgen kann, wobei jedoch in Fig. 3 erst zum Zeitpunkt t4 unter Anhebung der Antriebsaggregatdrehzahl 22 vom ersten Druckaufbauteilschritt 2 auf den zweiten Druckaufbauteilschritt 3 gewechselt wird, nämlich abhängig von einer Mindestverweilzeit bzw. Mindestdauer der ersten Druckaufbauteilphase 2, um die Getriebepumpe zu schützen.

Die erste Druckaufbauteilphase 2 der Druckaufbauphase 1 erstreckt sich demnach in Fig. 3 ausgehend vom Zeitpunkt t1 bis zum Zeitpunkt t4. Zum Zeitpunkt t4 erfolgt der Wechsel von der ersten Druckaufbauteilphase 2 auf die zweite Druckaufbauteilphase 3 unter Anheben der Antriebsaggregatdrehzahl 22. Dann, wenn auch für die zweite Druckaufbauteilphase 3 eine entsprechende Mindestdauer bzw. Mindestverweilzeit erreicht wurde, wird entsprechend dieser Übergangsbedingung 5 des Blocks 5 der Fig. 1 vom Druckaufbauschritt 1 auf den Druckkontrollschritt 6 gewechselt.

Im Druckkontrollschritt 6 wird der von den beiden Drucksensoren des Hydrostats bereitgestellte Messwert überprüft. Insbesondere wird überprüft, ob der Messwert beider Drucksensoren oberhalb eines definierten Schwellwerts bzw. Grenzwerts liegt. Dann, wenn dies der Fall ist, wenn also die entsprechende Übergangsbedingung 7 des Blocks 7 der Fig. 1 vorliegt, wird vom Druckkontrollschritt 6 auf einen ersten Heizschritt 8 wechselt.

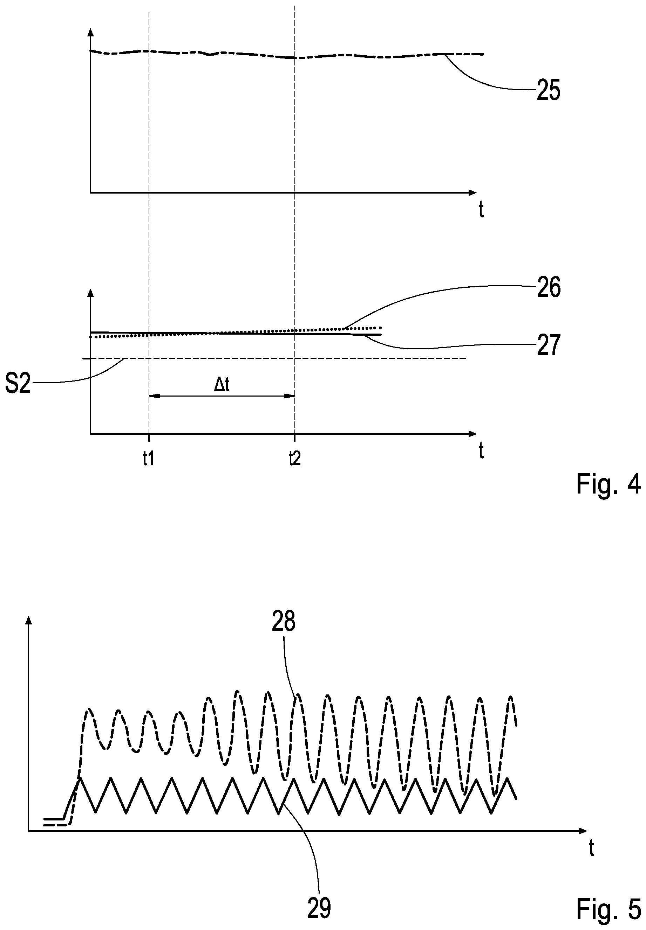

Details des Druckkontrollschritts 6 folgen aus dem Zeitdiagramm der Fig. 4, wobei in Fig. 4 über Zeit t als erster Signalverlauf 25 eine Antriebsaggregatdrehzahl und mit den Kurvenverläufen 26 und 27 wiederum Messwerte der Drucksensoren gezeigt sind. Zum Zeitpunkt t1 der Fig. 4 beginnt der Druckkontrollschritt 6, wobei zum Zeitpunkt t1 die Messwerte 26, 27 beider Drucksensoren des Hydrostaten größer als ein entsprechender Schwellwert bzw. Grenzwert S2 sind. Der Zeitpunkt t1 stimmt nicht mit dem Zeitpunkt t1 der Fig. 2, 3 überein. Für jeden Kaltstartschritt beziehen sich die jeweiligen Zeitpunkte immer nur auf den jeweiligen Kaltstartschritt. In der Druckkontrollphase muss für eine definierte Zeitdauer Δt, die in Fig. 4 durch die Zeitpunkte t1 und t2 begrenzt wird, das Messsignal 26, 27 der beiden Drucksensoren permanent oberhalb des Schwellwerts S2 des Druckkontrollschritts 6 liegen, sodass dann zum Zeitpunkt t2 der Fig. 4 die Übergangsbedingung 7 erfüllt ist und vom Druckkontrollschritt 6 auf den ersten Heizschritt 8 gewechselt werden kann.

Im ersten Heizschritt 8 wird erstmalig eine Wendekupplung des Leistungsverzweigungsgetriebes geschlossen, und zwar entweder die Kupplung für die Rückwärtsfahrt oder die Kupplung für die Vorwärtsfahrt. Durch dieses Schließen der jeweiligen Wendekupplung besteht ein Kraftfluss zum Planetenradgetriebe bzw. zum Überlagerungsgetriebe und damit zum Hydrostaten, wodurch Verlustleistung generiert wird, sodass über die anfallende Verlustleistung das Leistungsverzweigungsgetriebe im ersten Heizschritt erwärmt werden kann. Während die jeweilige Wendekupplung in der ersten Heizphase 8 geschlossen ist, wird der Hydrostat zunächst gering und später mit einer größeren Stromamplitude über das Positionsregelventil beaufschlagt. Durch diese Ansteuerung wird der Hydrostat zwischen einem bestimmten Winkel bzw. einer bestimmten Übersetzung bewegt.

Im ersten Heizschritt 8 wird demnach der Hydrostat definiert angesteuert und hierbei ein Ist-Verhalten des Hydrostats ermittelt. Bei der definierten Ansteuerung handelt es sich um die Beaufschlagung desselben mit einer wechselnden Stromamplitude, bei der Reaktion bzw. beim sich einstellenden Ist-Verhalten um die Übersetzung, die mit Hilfe von am Hydrostaten verbauten Drehzahlsensoren ermittelt werden kann.

Dann, wenn das sich ausbildende Ist-Verhalten einem vorgegebenen Soll-Verhalten entspricht bzw. um nicht mehr als einen definierten Grenzwert vom Soll-Verhalten abweicht, liegt die Übergangsbedingung 9 vor und es wird dann vom ersten Heizschritt 8 auf einen Pulsationsschritt 10 gewechselt. Während des ersten Heizschritts 8 kann die Antriebsaggregatdrehzahl verändert, vorzugsweise erhöht, werden.

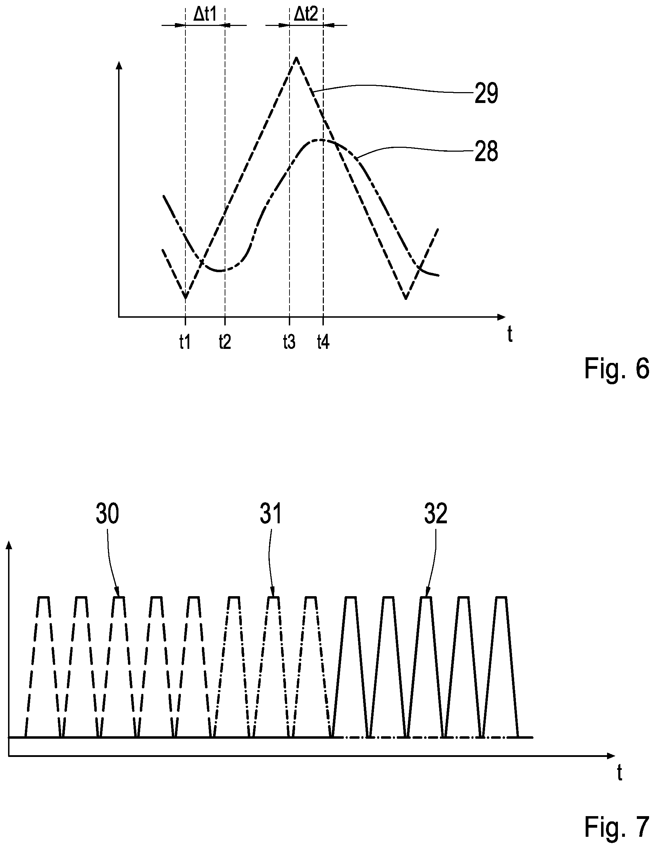

Details der ersten Heizphase 8 ergeben sich aus Fig. 5 und 6. In Fig. 5 sind über der Zeit t zwei zeitliche Signalverläufe 28 und 29 aufgetragen, wobei der Signalverlauf 29 die Ansteuerung des Hydrostats mit einer wechselnden Stromamplitude visualisiert, und wobei der Signalverlauf 28 die sich ausbildende Übersetzung des Hydrostats zeigt. Mit dem Ansteuerstrom 29 wird das Positionsregelventil des Hydrostats angesteuert.

In Fig. 6 sind weitere Details der ersten Heizphase 8 gezeigt, wobei in Fig. 6 über der Zeit t ein Ausschnitt der Signalverläufe 28 und 29 gezeigt ist, wobei der Signalverlauf 29 der Bestromung des Positionsregelventils des Hydrostats entspricht, und wobei der Signalverlauf 28 die sich infolge dieser Bestromung des Positionsregelventils ausbildende Übersetzung des Hydrostats zeigt.

Zum Zeitpunkt t1 erreicht die Bestromung des Positionsregelventils des Hydrostats ein Minimum. Nachfolgend erreicht zum Zeitpunkt t2 die Übersetzung des Hydrostats ein entsprechendes Minimum. Der Zeitversatz Δt1 der durch diese beiden Zeitpunkte t1 und t2 bestimmt wird, entspricht einer ersten Kenngröße für das Ist-Verhalten des Hydrostats infolge der definierten Ansteuerung des Positionsregelventils.

Zum Zeitpunkt t3 der Fig. 6 erreicht die Bestromung bzw. der Ansteuerstrom für das Positionsregelventil des Hydrostats ein Maximum, zum nachfolgenden Zeitpunkt t4 erreicht die sich hierdurch ausbildende Übersetzung 28 des Hydrostats ein entsprechendes Maximum, wobei auch die Zeitspanne Δt2 zwischen den Zeitpunkten t3 und t4 das Ist-Verhalten des Hydrostats beschreibt.

Dann, wenn für diese Zeitversätze Δt1 und Δt2 festgestellt wird, dass die Ist-Zeitversätze entsprechenden Soll-Zeitversätzen entsprechen bzw. um nicht mehr als einen Grenzwert von denselben abweichen, ist die Übergangsbedingung 9 erfüllt und es wird vom ersten Heizschritt 8 auf den Pulsationsschritt 10 gewechselt.

Im Pulsationsschritt 10 werden im Leistungsverzweigungsgetriebe Bereichskupplungen desselben abwechselnd und damit gepulst geschlossen und geöffnet. Das Pulsen der Bereichskupplung des Leistungsverzweigungsgetriebes erfolgt nach einer festen Anzahl. Dann, wenn die feste Anzahl der Pulse für das Schließen und Öffnen der Bereichskupplungen des Leistungsverzweigungsgetriebes erreicht ist, liegt die Übergangsbedingung 11 vor, und es wird vom Pulsationsschritt 10 auf einen zweiten Heizschritt 12 gewechselt.

Fig. 7 zeigt mit einem Zeitdiagramm über der Zeit t Ansteuerströme 30, 31 und 32 für drei Bereichskupplungen des Leistungsverzweigungsgetriebes. Die Anzahl der Pulse für den Ansteuerstrom zum Öffnen und Schließen der Bereichskupplungen wird zu Beginn des Kaltstarts abhängig von der Starttemperatur des Leistungsverzweigungsgetriebes bzw. der die Starttemperatur des Leistungsverzweigungsgetriebes repräsentierenden Temperatur bestimmt. Dies kann abhängig von einem Kennfeld oder einer Kennlinie erfolgen. Dann, wenn jede der Bereichskupplungen des Leistungsverzweigungsgetriebes im Pulsationsschritt 10 mit der entsprechenden Anzahl an Bestromungspulsen definiert geschlossen und geöffnet wurde, liegt die Übergangsbedingung 11 vor, und es wird vom Pulsationsschritt 10 auf den zweiten Heizschritt 12 gewechselt. Das Pulsen wird durchgeführt, um die Bereichskupplungen des Leistungsverzweigungsgetriebes während des Kaltstarts zu betätigen, damit das Hydrauliköl aus Zuleitungen der Bereichskupplungen sowie aus den Bereichskupplungen als solchen herausgefördert wird.

Im zweiten Heizschritt 12 des Kaltstarts wird das Positionsregelventil des Hydrostats aufgewärmt und überschwenkt, und zwar in einer festen zeitlichen Abfolge. Die Dauer des zweiten Heizschritts ist für alle Temperaturbereiche gleich, also unabhängig von der Starttemperatur des Leistungsverzweigungsgetriebes bzw. der die Starttemperatur desselben entsprechenden bzw. repräsentierenden Temperatur.

Der zweite Heizschritt 12 wird genutzt, um das Positionsregelventil des Hydrostaten mit einem entsprechenden Magneten in seinen beiden Endlagen zu überstrecken und so ggf. vorhandenes, hochviskoses Öl aus dem Positionsregelventil heraus zu spülen. Mit dem zweiten Heizschritt 12 wird sichergestellt, dass im Verstellsystem des Hydrostaten, welches aus Verstellzylinder, Verstellventil, Verstellmagnet und Rückmeldesystem besteht, komplett durchbetätigt wurde und somit kein unerwünschtes Verhalten in seinen Endlagen zu erwarten ist.

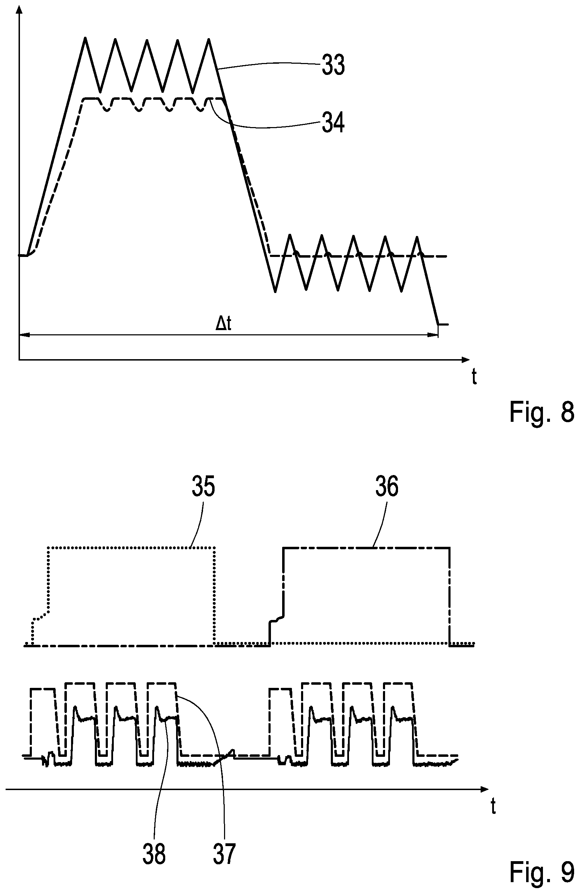

Weitere Details des zweiten Heizschritts 12 folgen aus Fig. 8, wobei in Fig. 8 über der Zeit t die zeitlichen Kurvenverläufe 33 und 34 gezeigt sind, nämlich mit dem Kurvenverlauf 33 eine Bestromung des Positionsregelventils des Hydrostaten und mit dem Kurvenverlauf 34 eine sich hierbei ausbildende Reaktion, nämlich eine Übersetzung des Hydrostaten. Während des zweiten Heizschritts 12, der für eine vorgegebene Zeitspanne Δt durchgeführt wird, wird demnach das Gesamtverstellsystem in seine Endlagen überführt, um dasselbe über seinen kompletten Verstellweg zu betätigen.

Vom zweiten Heizschritt 12 wird bei Vorliegen einer Übergangsbedingung 13 auf einen Antriebsvorbereitungsschritt 14 gewechselt, und zwar abhängig von einer definierten Zeitspanne, die unabhängig von der Starttemperatur des Leistungsverzweigungsgetriebes bzw. der die Starttemperatur des Leistungsverzweigungsgetriebes repräsentierenden Temperatur ist.

Bei der Übergangsbedingung 13 für den Wechsel vom zweiten Heizschritt 12 auf den Antriebsvorbereitungsschritt 14 handelt es sich demnach um die temperaturunabhängige, definierte Zeitspanne für den zweiten Heizschritt, nach deren Ablauf vom zweiten Heizschritt 12 auf den Antriebsvorbereitungsschritt 14 gewechselt wird.

In dem Antriebsvorbereitungsschritt 14 wird ein Verhalten der Wendekupplungen und des Hydrostats des Leistungsverzweigungsgetriebes überprüft und das Leistungsverzweigungsgetriebe auf einen nachfolgenden Anfahrvorgang des Fahrzeugs vorbereitet.

Dann, wenn sich bei einem Schließvorgang der Wendekupplungen denselben ein definierter Differenzdrehzahlabbau ausbildet, und dann, wenn sich abhängig von einer Ansteuerung des Hydrostaten an demselben eine definierte Reaktionszeit einstellt, wird der Antriebsvorbereitungsschritt bei Vorliegen der entsprechenden Übergangsbedingung 15 und damit der eigentliche Kaltstart beendet, um so vom Antriebsvorbereitungsschritt 14 in einen Wartezustand oder einen Bereitschaftzustand für eine Anfahranforderung zu wechseln, wobei dieser Wartezustand bzw. Bereitschaftszustand in Fig. 1 durch den Block 16 visualisiert ist.

Details des Antriebsvorbereitungsschritts 14 werden nachfolgend unter Bezugnahme auf Fig. 9 bis 11 beschrieben. In Fig. 9 sind über der Zeit t mehrere zeitliche Kurvenverläufe aufgetragen, und zwar mit dem Kurvenverlauf 35 die Ansteuerung einer ersten Wendekupplung und mit dem Kurvenverlauf 36 die Ansteuerung einer zweiten Wendekupplung. Der zeitliche Kurvenverlauf 37 visualisiert eine Bestromung des Positionsregelventils des Hydrostaten und der Kurvenverlauf 38 eine sich hierbei ausbildende Reaktion des Hydrostaten, nämlich eine sich ausbildende Übersetzung. Während des Antriebsvorbereitungsschritts 14 erfolgt eine Überprüfung des Verhaltens der Wendekupplungen sowie des Hydrostats. Die Wendekupplungen werden über eine definierte Schließrampe geschlossen. Wird erkannt, dass sich hierbei eine Sekundärdrehzahl an der jeweiligen über die Schließrampe zum Schließen angesteuerten Wendekupplung ausbildet, so wird die Wendekupplung weiter definiert geschlossen. Während dieses Schließvorgangs wird eine Zeitdauer erfasst und bewertet, wie lange die jeweilige Wendekupplung benötigt, bis eine Differenzdrehzahl an der Wendekupplung abgebaut wurde. Die Schließrampe für das Schließen der jeweiligen Wendekupplung wird so gewählt, dass es zu keiner Überfüllung und damit zu keiner Beschädigung der jeweiligen Wendekupplung kommen kann. Dann, wenn die Differenzdrehzahl entsprechend abgebaut wurde und die hierfür benötigte Zeit innerhalb eines Grenzwerts liegt, wird die jeweilige Wendekupplung als ordnungsgemäß erkannt. Die Wendekupplungen werden solange wechselseitig alternierend beaufschlagt, also geschlossen, bis beide Wendekupplungen ein gewünschtes Zeitverhalten beim Differenzdrehzahlabbau zeigen und demnach ordnungsgemäß arbeiten. Für die Bewertung einer Wendekupplung sind die primäre sowie die sekundäre Drehzahl der Wendekupplung, und zwar die Differenz zwischen der primären und der sekundären Drehzahl, von Relevanz.

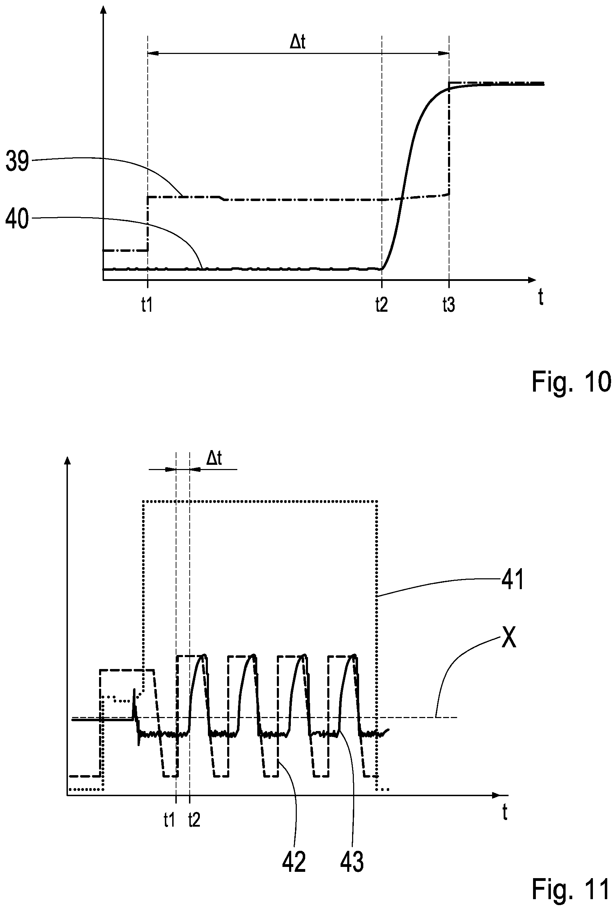

Fig. 10 verdeutlicht in einem Zeitdiagramm über der Zeit t die Überprüfung einer Wendekupplung während des Antriebsvorbereitungsschritts 14. Der Signalverlauf 39 visualisiert die Bestromung der jeweiligen Wendekupplung und der Signalverlauf 40 eine sich ausbildende Reaktion, nämlich eine Drehzahl an der jeweiligen Wendekupplung. Zum Zeitpunkt t1 der Fig. 10 beginnt das Schließen der jeweiligen Wendekupplung, wobei zum Zeitpunkt t2 eine definierte Sekundärdrehzahl an der Wendekupplung erkannt wird. Zum Zeitpunkt t2 wird dann die entsprechende Wendekupplung weiter gezielt geschlossen, wobei zum Zeitpunkt t3 die Differenzdrehzahl an der Wendekupplung definiert abgebaut hat. Die Zeitspanne Δt zwischen den Zeitpunkten t1 und t3 der Fig. 10 entspricht einer Zeitspanne, die nach Beginn der Ansteuerung derselben zum Zeitpunkt t1 benötigt, um die Differenzdrehzahl an derselben definiert abzubauen. Anhand dieser Zeitdifferenz Δt wird bewertet, ob die jeweilige Wendekupplung ordnungsgemäß arbeitet und demnach ein gewünschtes Verhalten zeigt.

Wie bereits ausgeführt, wird im Antriebsvorbereitungsschritt 14 nicht nur das Verhalten der Wendekupplungen bewertet, sondern auch das Verhalten des Hydrostaten, nämlich sobald die jeweilige Wendekupplung geschlossen ist und ein vollständiger Kraftfluss zum Hydrostaten hin besteht. Sobald die jeweilige Wendekupplung geschlossen ist, wird der Hydrostat durch Bestromen des Positionsregelventils desselben definiert angesteuert. Hierbei wird die Bestromung ausgehend von einem Ruhestrom, der leicht oberhalb eines sogenannten Diagnosestroms liegt, auf einen Strom leicht oberhalb eines sogenannten Nullwinkelstroms erhöht, wobei der Nullwinkelstrom aus einer Kalibrierung des Hydrostaten abgeleitet wurde. Hierbei wird bewertet, wie lange ein Zeitversatz bzw. eine Differenzzeit zwischen der Ansteuerung des Hydrostaten und der Reaktion desselben beträgt. Dabei erfolgt die Auswertung analog einer Sprungantwort.

Dieser Vorgang wird mehrmalig bei geschlossener Wendekupplung wiederholt bzw. durchgeführt. Liegt der Zeitversatz zwischen der Ansteuerung und der Reaktion des Hydrostaten innerhalb eines definierten Wertebereichs, so wird der Hydrostat als ordnungsgemäß funktionierend bewertet und erkannt.

Fig. 11 zeigt über der Zeit t wiederum mehrere zeitliche Kurvenverläufe, welche die Diagnose des Hydrostaten während des Antriebsvorbereitungsschritts 14 visualisieren. So zeigt ein Kurvenverlauf 41 einen Schließzustand einer Wendekupplung, die während der Überprüfung des Hydrostaten vollständig geschlossen ist. Ein Kurvenverlauf 42 visualisiert die Bestromung des Positionsregelventils des Hydrostaten und ein Kurvenverlauf 43 die sich infolge dieser Bestromung ausbildende Reaktion, nämlich eine sich ausbildende Übersetzung. Sobald nach Erkennen einer ordnungsgemäßen Wendekupplung sowie bei geschlossener Wendekupplung bekannt wird, dass gemäß dem Kurvenverlauf 42 die Bestromung des Positionsregelventils auf einen definierten Wert abgesenkt wurde, wird zum Zeitpunkt t1 die Bestromung des Positionsregelventils sprunghaft auf einen definierten Wert erhöht, und es wird überprüft, wann nachfolgend gemäß dem Kurvenverlauf 43 als Reaktion des Hydrostaten die Übersetzung desselben oberhalb eines definierten Werts X liegt. Dieser Zeitversatz Δt, der durch die Zeitpunkte t1 und t2 definiert wird, also der Zeitversatz, nach dem die Bestromung des Positionsregelventils sprunghaft erhöht wurde und sich in Reaktion hierauf die Übersetzung des Hydrostaten oberhalb des Werts x verändert hat, wird erfasst und bewertet. Liegt dieser Zeitversatz Δt innerhalb eines definierten Wertebereichs, so wird der Hydrostat als ordnungsgemäß funktionierend erkannt.

Dann, wenn sowohl die Wendekupplungen als auch der Hydrostat im Antriebsvorbereitungsschritt 14 als ordnungsgemäß arbeitend erkannt wurden, liegt die Übergangsbedingung 15 vor, und es wird vom Antriebsvorbereitungsschritt 14 auf den Wartezustand 16 bzw. auf den Anfahrbereitschaftszustand 16 gewechselt.

Während des Wartezustands 16, also nach Abschluss des Kaltstarts, wird gewartet, ob fahrerseitig ein Anfahrvorgang angefordert wird. Hierbei wird dann die Antriebsaggregatdrehzahl durch ein Motorsteuergerät vorgegeben und nicht mehr durch ein den Kaltstartvorgang steuerungsseitig ausführendes Getriebesteuergerät. Während des Wartezustands 16 wird demnach das Vorliegen einer Übergangsbedingung 17 überprüft, bei welcher es sich um eine fahrseitige Anforderung eines Anfahrvorgangs handelt, wobei bei Vorliegen dieser Übergangsbedingung auf den Anfahrzustand 18 der Fig. 1 gewechselt und ein Anfahrvorgang durchgeführt wird.

Sollte während des Wartezustands 16 kein fahrerseitiger Anfahrvorgang für eine definierte Zeitspanne vorliegen, kann während des Wartezustands mindestens eine Wendekupplung definiert geschlossen werden, um Verlustleistung im Leistungsverzweigungsgetriebe zu erzeugen und somit ein Wiederabkühlen des Leistungsverzweigungsgetriebes zu vermeiden.

Mit dem erfindungsgemäßen, eventbasierten Kaltstartverfahren kann ein Kaltstart eines Fahrzeugs mit einem Leistungsverzweigungsgetriebe, welches einen Hydrostaten umfasst, innerhalb kurzer Zeit sowie äußerst robust durchgeführt werden. Wendekupplungen und Hydrostat können auf eine ordnungsgemäße Funktion überprüft werden.

Das erfindungsgemäße Verfahren zum Durchführen eines Kaltstarts bei einem Fahrzeug stellt eine Art Felddiagnose für das Getriebe bereit, mit welcher der ordungsgemäße Betrieb des Getriebes im Feld überwacht werden kann. Es werden alle Schritte oder Phasen des Verfahrens durchlaufen, wodurch die sichere Funktion des Getriebes gewährleistet wird. Nach Beendigung des Verfahrens steht ein Fahrzeug mit einem Getriebe mit gesteigerter oder voller Dynamik und mit verringerter oder ohne Komforteinbußen zur Verfügung. Das Verfahren ist robust und demnach nicht anfällig gegenüber einem Antriebsaggregatfehlstart bei tiefen Temperaturen, einer Kaltstartwiederholung des Antriebsaggregats und der Viskosität des verwendeten Getriebeöls.

### Bezugszeichen

- 1: Druckaufbauschritt
- 2: Druckaufbauteilschritt
- 3: Druckaufbausteilschritt
- 4: Übergangsbedingung
- 5: Übergangsbedingung
- 6: Druckkontrollschritt
- 7: Übergangsbedingung
- 8: erster Heizschritt
- 9: Übergangsbedingung
- 10: Pulsationsschritt
- 11: Übergangsbedingung
- 12: zweiter Heizschritt
- 13: Übergangsbedingung
- 14: Antriebsvorbereitungsschritt
- 15: Übergangsbedingung
- 16: Wartezustand
- 17: Übergangsbedingung
- 18: Anfahrzustand
- 19: Kurvenverlauf
- 20: Kurvenverlauf
- 21: Kurvenverlauf
- 22: Kurvenverlauf
- 23: Kurvenverlauf
- 24: Kurvenverlauf
- 25: Kurvenverlauf
- 26: Kurvenverlauf
- 27: Kurvenverlauf
- 28: Kurvenverlauf
- 29: Kurvenverlauf
- 30: Kurvenverlauf
- 31: Kurvenverlauf
- 32: Kurvenverlauf
- 33: Kurvenverlauf
- 34: Kurvenverlauf
- 35: Kurvenverlauf
- 36: Kurvenverlauf
- 37: Kurvenverlauf
- 38: Kurvenverlauf
- 39: Kurvenverlauf
- 40: Kurvenverlauf
- 41: Kurvenverlauf
- 42: Kurvenverlauf
- 43: Kurvenverlauf
- 44: Power-Take-Out
- 45: Antriebsaggregat
- 46: Wendegetriebe
- 47: Leistungsverzeigungsgetriebe
- 48: Hydrostat
- 49: Planetenradgetriebe
- 50: Summierungsgetriebe
- 51: Fahrbereichsgetriebe
- 52: Abtrieb

## Patentansprüche

1. Verfahren zum Durchführen eines Kaltstarts bei einem Fahrzeug, welches ein Leistungsverzweigungsgetriebe mit einem hydrostatische Einheiten umfassenden Hydrostat aufweist, wobei zum Kaltstart mehrere Kaltstartschritte nacheinander durchgeführt werden, wobei die Länge mindestens eines der Kaltstartschritte abhängig von einer die Starttemperatur des Leistungsverzweigungsgetriebes repräsentierenden Temperatur angepasst wird, **dadurch gekennzeichnet, dass** während der Ausführung zumindest eines der Kaltstartschritte wenigstens ein Wert eines getriebeinternen Drucksensors des Leistungsverzweigungsgetriebes überwacht wird, und dass abhängig von diesem Wert ein Wechsel von dem jeweiligen Kaltstartschritt auf einen nachfolgenden Kaltstartschritt durchgeführt und damit die Zeitdauer des jeweiligen Kaltstartschritts angepasst wird.

2. Verfahren nach Anspruch 1, **dadurch gekennzeichnet, dass** zum Kaltstart die folgenden Kaltstartschritte nacheinander durchgeführt werden:
zunächst ein Druckaufbauschritt, um im Leistungsverzweigungsgetriebe definiert Druck aufzubauen und dasselbe über den Betrieb einer Getriebepumpe zu erwärmen,
anschließend ein Druckkontrollschritt, um den Druckaufbau im Getriebe zu überprüfen,
nachfolgend ein erster Heizschritt, um im Leistungsverzweigungsgetriebe mindestens eine Wendekupplung zu schließen und dasselbe über im Leistungsverzweigungsgetriebe anfallende Verlustleistung zu erwärmen,
anschließend ein Pulsationsschritt, um im Leistungsverzweigungsgetriebe Bereichskupplungen desselben gepulst zu schließen und zu öffnen,
nachfolgend ein zweiter Heizschritt, um im Leistungsverzweigungsgetriebe mindestens ein Positionsregelventil des Hydrostats zu erwärmen,
anschließend ein Antriebsvorbereitungsschritt, um ein Verhalten der Wendekupplungen und des Hydrostats des Leistungsverzweigungsgetriebes zu überprüfen und das Leistungsverzweigungsgetriebe auf einen Anfahrvorgang des Fahrzeugs vorzubereiten.

3. Verfahren nach Anspruch 2, **dadurch gekennzeichnet, dass** während des Druckaufbauschritts von einem ersten Druckaufbauteilschritt, in welchem ein Antriebsaggregat bei einer relativ geringen Antriebsaggregatdrehzahl betrieben wird, auf einen zweiten Druckaufbauteilschritt, in welchem das Antriebsaggregat bei einer relativ großen Antriebsaggregatdrehzahl betrieben wird, gewechselt wird.

4. Verfahren nach 3, **dadurch gekennzeichnet, dass** vom ersten Druckaufbauteilschritt auf den zweiten Druckaufbauteilschritt abhängig von mindestens zwei Drücken im Hydrostat gewechselt wird.

5. Verfahren nach einem der Ansprüche 2 bis 4, **dadurch gekennzeichnet, dass** vom Druckaufbauschritt auf den Druckkontrollschritt abhängig von einer Mindestdauer des Druckaufbauschritts gewechselt wird.

6. Verfahren nach einem der Ansprüche 2 bis 5, **dadurch gekennzeichnet, dass** vom Druckkontrollschritt auf den ersten Heizschritt abhängig von mindestens zwei Drücken im Hydrostat gewechselt wird.

7. Verfahren nach einem der Ansprüche 2 bis 6, **dadurch gekennzeichnet, dass** vom ersten Heizschritt auf den Pulsationsschritt abhängig von einem Vergleich eines Ist-Verhaltens des Hydrostats auf eine definierte Ansteuerung desselben und einem entsprechenden Soll-Verhalten des Hydrostats gewechselt wird.

8. Verfahren nach einem der Ansprüche 2 bis 7, **dadurch gekennzeichnet, dass** vom Pulsationsschritt auf den zweiten Heizschritt abhängig von einer definiten Pulsationsanzahl gewechselt wird, die zu Beginn des Kaltstarts abhängig von der die Starttemperatur des Leistungsverzweigungsgetriebes repräsentierenden Temperatur gewählt wird.

9. Verfahren nach einem der Ansprüche 2 bis 8, **dadurch gekennzeichnet, dass** vom zweiten Heizschritt auf den Antriebsvorbereitungsschritt abhängig von einer definierten Zeitspanne, die unabhängig von der die Starttemperatur des Leistungsverzweigungsgetriebes repräsentierenden Temperatur ist, gewechselt wird.

10. Verfahren nach einem der Ansprüche 2 bis 9, **dadurch gekennzeichnet, dass** der Antriebsvorbereitungsschritt und damit der Kaltstart abhängig von einem sich bei einem Schließvorgang der Wendekupplungen an denselben ausbildenden Abbaus der Differenzdrehzahl und abhängig von einer sich bei Ansteuerung des Hydrostats ausbildenden Reaktionszeit beendet wird.

## Claims

1. Method for carrying out a cold start in the case of a vehicle which has a power split transmission with a hydrostatic unit which comprises hydrostatic units, a plurality of cold start steps being carried out one after another for the cold start, the length of at least one of the cold start steps being adapted in a manner which is dependent on a temperature which represents the start temperature of the power split transmission, **characterized in that**, while at least one of the cold start steps is being carried out, at least one value of a transmission-internal pressure sensor of the power split transmission is monitored, and **in that** a change from the respective cold start step to a following cold start step is carried out in a manner which is dependent on the said value, and therefore the time duration of the respective cold start step is adapted.

2. Method according to Claim 1, **characterized in that** the following cold start steps are carried out one after another for the cold start:
first of all, a pressure build-up step, in order to build up pressure in a defined manner in the power split transmission and to heat the latter via the operation of a gear pump,
subsequently, a pressure check step, in order to check the pressure build-up in the transmission, afterwards, a first heating step, in order to close at least one reversing clutch in the power split transmission and to heat the latter via power loss which occurs in the power split transmission,
subsequently, a pulsing step, in order to close and open range clutches of the power split transmission in a pulsed manner in the said power split transmission, afterwards, a second heating step, in order to heat at least one position control valve of the hydrostatic unit in the power split transmission,
subsequently, a drive preparation step, in order to check a behaviour of the reversing clutches and the hydrostatic unit of the power split transmission, and to prepare the power split transmission for a moving-off operation of the vehicle.

3. Method according to Claim 2, **characterized in that**, during the pressure build-up step, a change is carried out from a first pressure build-up part step, in which a drive unit is operated at a relatively low drive unit rotational speed, to a second pressure build-up part step, in which the drive unit is operated at a relatively high drive unit rotational speed.

4. Method according to Claim 3, **characterized in that** a change is carried out from the first pressure build-up part step to the second pressure build-up part step in a manner which is dependent on at least two pressures in the hydrostatic unit.

5. Method according to one of Claims 2 to 4, **characterized in that** a change is carried out from the pressure build-up step to the pressure check step in a manner which is dependent on a minimum duration of the pressure build-up step.

6. Method according to one of Claims 2 to 5, **characterized in that** a change is carried out from the pressure check step to the first heating step in a manner which is dependent on at least two pressures in the hydrostatic unit.

7. Method according to one of Claims 2 to 6, **characterized in that** a change is carried out from the first heating step to the pulsing step in a manner which is dependent on a comparison of an actual behaviour of the hydrostatic unit to a defined actuation of the latter and a corresponding setpoint behaviour of the hydrostatic unit.

8. Method according to one of Claims 2 to 7, **characterized in that** a change is carried out from the pulsing step to the second heating step in a manner which is dependent on a definite number of pulses which is selected at the beginning of the cold start in a manner which is dependent on the temperature which represents the start temperature of the power split transmission.

9. Method according to one of Claims 2 to 8, **characterized in that** a change is carried out from the second heating step to the drive preparation step in a manner which is dependent on a defined time period which is independent of the temperature which represents the start temperature of the power split transmission.

10. Method according to one of Claims 2 to 9, **characterized in that** the drive preparation step and therefore the cold start are ended in a manner which is dependent on a reduction of the differential rotational speed which is produced at the reversing clutches in the case of a closing operation of the said reversing clutches, and in a manner which is dependent on a reaction time which is produced in the case of actuation of the hydrostatic unit.

## Revendications

1. Procédé pour la réalisation d'un démarrage à froid d'un véhicule, qui comprend une transmission à dérivation de puissance pourvue d'un hydrostat comprenant des unités hydrostatiques, plusieurs étapes de démarrage à froid étant réalisées les unes après les autres pour le démarrage à froid, la longueur d'au moins une des étapes de démarrage à froid étant adaptée en fonction d'une température représentant la température de démarrage de la transmission à dérivation de puissance, **caractérisé en ce que**, pendant l'exécution d'au moins une des étapes de démarrage à froid, au moins une valeur d'un capteur de pression interne à la transmission de la transmission à dérivation de puissance est surveillée, et **en ce qu'**en fonction de cette valeur, un passage de l'étape de démarrage à froid respective à une étape de démarrage à froid suivante est réalisé, et la durée de l'étape de démarrage à froid respective est ainsi adaptée.

2. Procédé selon la revendication 1, **caractérisé en ce que**, pour le démarrage à froid, les étapes de démarrage à froid suivantes sont réalisées les unes après les autres :
tout d'abord une étape de montée en pression, afin de développer une pression définie dans la transmission à dérivation de puissance et de chauffer celle-ci par l'intermédiaire de l'exploitation d'une pompe à engrenage,
puis une étape de contrôle de la pression, afin de vérifier la montée en pression dans la transmission,
suivie par une première étape de chauffage, afin de fermer au moins un accouplement de basculement dans la transmission à dérivation de puissance et de chauffer celui-ci par l'intermédiaire de la perte de puissance formée dans la transmission à dérivation de puissance,
puis une étape de pulsation, afin de fermer et d'ouvrir de manière pulsée des dispositifs d'embrayage de vitesse de la transmission à dérivation de puissance dans celle-ci,
puis une deuxième étape de chauffage, afin de chauffer au moins une soupape de régulation de position de l'hydrostat dans la transmission à dérivation de puissance,
puis une étape de préparation de l'entraînement, afin de vérifier un comportement des accouplements de basculement et de l'hydrostat de la transmission à dérivation de puissance et de préparer la transmission à dérivation de puissance à un processus de démarrage du véhicule.

3. Procédé selon la revendication 2, **caractérisé en ce que**, pendant l'étape de montée en pression, on passe d'une première étape partielle de montée en pression, dans laquelle un groupe d'entraînement est exploité à une vitesse de rotation de groupe d'entraînement relativement faible, à une deuxième étape partielle de montée en pression, dans laquelle le groupe d'entraînement est exploité à une vitesse de rotation de groupe d'entraînement relativement grande.

4. Procédé selon la revendication 3, **caractérisé en ce qu'**on passe de la première étape partielle de montée en pression à la deuxième étape partielle de montée en pression en fonction d'au moins deux pressions dans l'hydrostat.

5. Procédé selon l'une quelconque des revendications 2 à 4, **caractérisé en ce qu'**on passe de l'étape de montée en pression à l'étape de contrôle de la pression en fonction d'une durée minimale de l'étape de montée en pression.

6. Procédé selon l'une quelconque des revendications 2 à 5, **caractérisé en ce qu'**on passe de l'étape de contrôle de la pression à la première étape de chauffage en fonction d'au moins deux pressions dans l'hydrostat.

7. Procédé selon l'une quelconque des revendications 2 à 6, **caractérisé en ce qu'**on passe de la première étape de chauffage à l'étape de pulsation en fonction d'une comparaison d'un comportement réel de l'hydrostat pour une commande définie de celui-ci et d'un comportement de consigne correspondant de l'hydrostat.

8. Procédé selon l'une quelconque des revendications 2 à 7, **caractérisé en ce qu'**on passe de l'étape de pulsation à la deuxième étape de chauffage en fonction d'un nombre défini de pulsations, qui est choisi au début du démarrage à froid en fonction de la température représentant la température de démarrage de la transmission à dérivation de puissance.

9. Procédé selon l'une quelconque des revendications 2 à 8, **caractérisé en ce qu'**on passe de la deuxième étape de chauffage à l'étape de préparation de l'entraînement en fonction d'une durée de temps définie, qui est indépendante de la température représentant la température de démarrage de la transmission à dérivation de puissance.

10. Procédé selon l'une quelconque des revendications 2 à 9, **caractérisé en ce que** l'étape de préparation de l'entraînement, et par conséquent le démarrage à froid, est terminée en fonction d'une réduction de la vitesse de rotation différentielle qui se développe lors d'un processus de fermeture des accouplements de basculement au niveau de ceux-ci et en fonction d'un temps de réaction qui se développe lors de la commande de l'hydrostat.
